# FASCICULE DE BREVET EUROPEEN

(11) **EP 4 111 036 B1**
(45) Date de publication et mention de la délivrance du brevet: **20.12.2023**
(21) Numéro de dépôt: 21711309.1
(22) Date de dépôt: 24.02.2021
(51) Int. Cl.: F01D 9/06, F01D 5/18

(54) **PALE DE DISTRIBUTEUR POUR TURBOMACHINE, DISTRIBUTEUR HAUTE OU BASSE PRESSION POUR TURBOMACHINE, TURBOMACHINE ET PROCÉDÉ DE FABRICATION D'UNE PALE D'UN DISTRIBUTEUR POUR TURBOMACHINE**
SCHAUFEL EINES LEITAPPARATS FÜR STRÖMUNGSMASCHINE, HOCH- ODER NIEDERDRUCK-LEITAPPARAT FÜR STRÖMUNGSMASCHINE, STRÖMUNGSMASCHINE UND VERFAHREN ZUR HERSTELLUNG EINER SCHAUFEL EINES LEITAPPARATS FÜR STRÖMUNGSMASCHINE
NOZZLE VANE FOR TURBOMACHINE, CORRESPONDING HIGH OR LOW PRESSURE NOZZLE FOR TURBOMACHINE, TURBOMACHINE AND METHOD OF MANUFACTURING A VANE OF A NOZZLE FOR TURBOMACHINE

(30) Priorité: 28.02.2020 FR 2002005
(43) Date de publication de la demande: 04.01.2023
(73) Titulaire: SAFRAN AIRCRAFT ENGINES, 75015 Paris (FR)
(72) Inventeur: YVETOT, Jonathan, 77550 MOISSY-CRAMAYEL (FR)
(74) Mandataire: Cabinet Camus Lebkiri
(86) Numéro de dépôt international: PCT/FR2021/050319
(87) Numéro de publication internationale: WO 2021/170952

(56) Documents cités:
- EP-A1- 1 626 162
- US-A- 4 798 515
- US-A1- 2018 328 187

## Description

### DOMAINE TECHNIQUE DE L'INVENTION

La présente invention concerne une pale de distributeur pour turbomachine dans lequel les chemises sont imbriquées l'une dans l'autre. L'invention concerne également un procédé de fabrication d'une pale d'un distributeur pour turbomachine.

L'invention concerne aussi un distributeur haute ou basse pression pour turbomachine, équipé de telles pales et une turbomachine équipée de ce distributeur.

L'invention trouve des applications dans le domaine de l'aéronautique et, en particulier, dans le domaine des distributeurs haute ou basse pression de moteurs d'aéronefs.

### ARRIERE-PLAN TECHNOLOGIQUE DE L'INVENTION

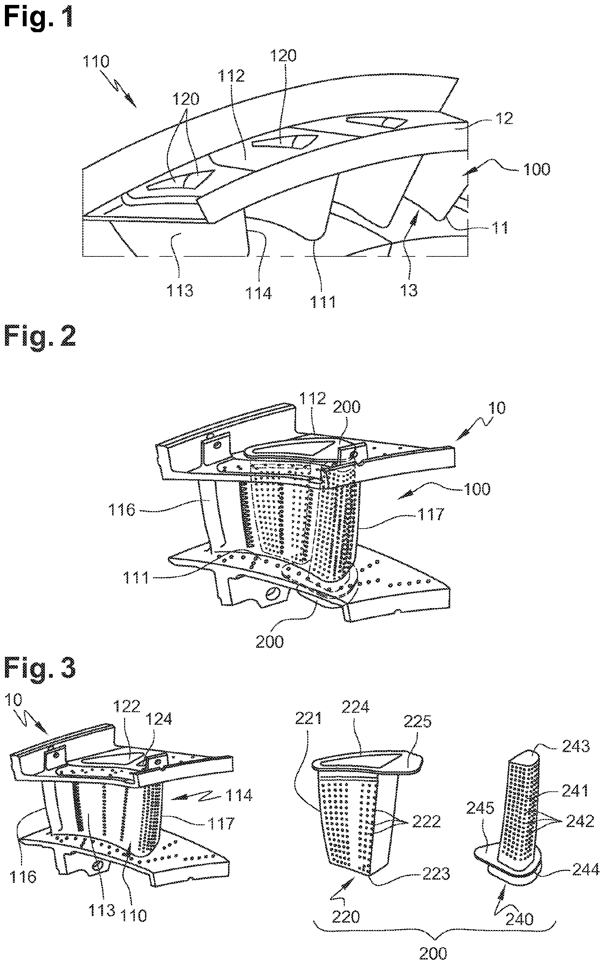

Dans une turbomachine d'aéronef, comme par exemple un turboréacteur ou un turbopropulseur, le distributeur haute pression et le distributeur basse pression comportent chacun un ensemble de pales creuses, fixes et agencées annulairement dans la veine d'écoulement des gaz entre la sortie de la chambre de combustion et l'entrée de la turbine. Un exemple d'une portion de distributeur haute pression 10 est représenté sur la figure 1. Ce distributeur haute pression 10 comporte une pluralité de pales 100 s'étendant radialement entre deux plateformes annulaires coaxiales, à savoir une plateforme interne 11 et une plateforme externe 12, qui délimitent la veine 13 de circulation des gaz éjectés par la chambre de combustion. Chacune des pales 100 comporte un corps de pale 110 comprenant une extrémité radiale interne 111 et une extrémité radiale externe 112. Le corps de pale 110 comporte, entre ses extrémités interne 111 et externe 112, une paroi intrados 113 et une paroi extrados 114 équipées chacune d'orifices de refroidissement adaptés pour laisser passer de l'air.

Du fait de leur positionnement dans la veine de circulation des gaz 13, l'ensemble des pales 100 est soumis aux très fortes températures des gaz. Les pales 100 doivent donc être refroidies en permanence. Pour cela, en plus des orifices de refroidissement, le corps de pale 110 de chaque pale 100 comporte généralement une ou plusieurs cavités traversantes 120 s'étendant radialement entre l'extrémité interne 112 et l'extrémité externe 111. Une chemise d'étanchéité 200, appelée plus simplement chemise, est enchâssée dans chacune des cavités traversantes 120 de chaque pale 100 de sorte à définir un interstice périphérique annulaire entre la surface interne du corps de pale et la surface externe de la chemise. Un exemple d'une pale 100 à deux cavités traversantes 122, 124 abritant chacune une chemise 200 est représenté montée sur la figure 2 et en éclaté sur la figure 3. Les deux cavités traversantes 122, 124 de la pale 100 sont coaxiales et s'étendent radialement l'une contre l'autre. La première cavité traversante 122, positionnée sur le bord de fuite 116 de la pale, abrite une première chemise 220 ; la seconde cavité traversante 124, positionnée sur le bord d'attaque 117 de la pale, abrite une seconde chemise 240.

Chaque chemise 220, 240 comporte une paroi radiale 221, 241 munie d'une pluralité de trous 222, 242 répartis sur toute la paroi radiale, entre les plateformes annulaires interne 11 et externe 12. Chaque chemise 220, 240 comporte une face fermée 223, 243 et une face ouverte 224, 244. La face fermée 223 de la première chemise 220 débouche au niveau de l'extrémité interne 111 de la pale 100 et la face fermée 243 de la seconde chemise 240 débouche au nveau de l'extrémité externe 112 de la pale 100. La face ouverte 224 de la première chemise 220 débouche au niveau de l'extrémité externe 112 de la pale 100 et la face ouverte 244 de la seconde chemise 240 débouche au niveau de l'extrémité interne 111 de la pale 100. Ainsi, la face ouverte 224, 244 de chacune des chemises 220, 240 reçoit de l'air relativement frais, prélevé en amont de la chambre de combustion, à la sortie d'un étage du compresseur. Cet air frais pénètre à l'intérieur des chemises 220, 240 pour refroidir par impact, depuis l'intérieur, les parois intrados 113 et extrados 114 de la pale.

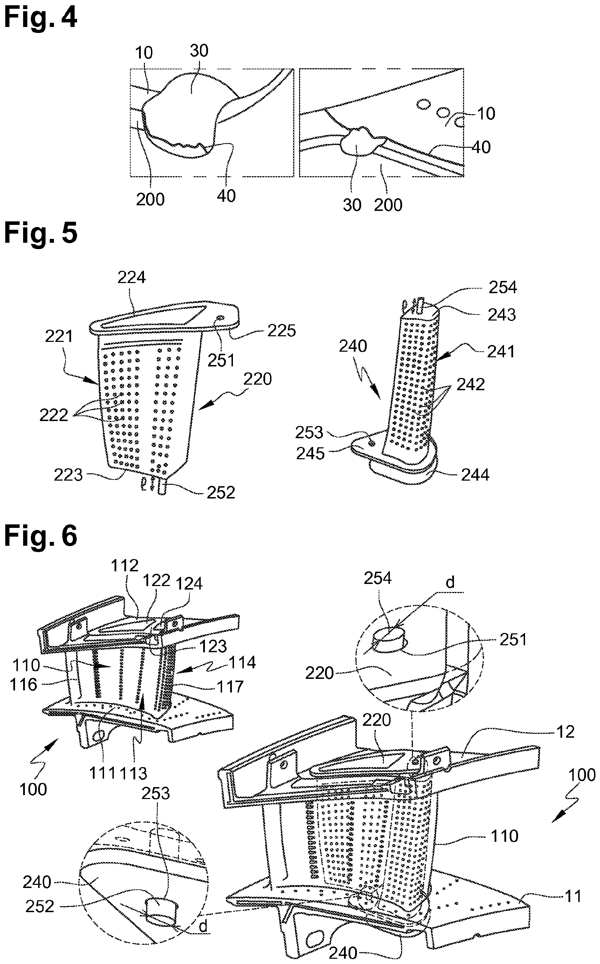

La face ouverte 224, 244 des chemises 220, 240 comporte généralement une collerette, respectivement 225 et 245, permettant de maintenir un entrefer radial entre la chemise et la pale. Cette collerette 225, 245 permet également de fixer la chemise dans le distributeur. En effet, chaque chemise est fixée sur le distributeur 10, généralement, par soudage - par exemple au moyen de trois points de soudure répartis sur le contour de collerette - ou par brasage - par exemple au moyen d'une brasure s'étendant sur tout le contour de la collerette. Avec ce type de fixation (soudure ou brasure) des chemises dans le distributeur, chaque chemise est encastrée au sein du distributeur et liée mécaniquement audit distributeur. Or, les zones de liaison, ou fixation, des chemises sur le distributeur sont des zones pouvant être fortement sollicitées. En effet, sous l'effet des changements de température au sein de la turbine, le distributeur et les chemises ont tendance à se dilater. Or, le distributeur et les chemises sont fabriqués dans des matériaux différents, par exemple en alliages AM1 ou René 125 pour le distributeur et Hastelloy X ou HA 188 pour les chemises, ce qui génère d'importantes sollicitations au niveau des zones de liaison entre chemises et distributeur. Des exemples de fissures sont représentées sur la figure 4, au niveau des zones de liaison 30 entre une chemise 200 et un distributeur 10. Les sollicitations générées dans les zones de liaison 30 par les dilatations peuvent être à l'origine de fissures 40 et même de ruptures dans ces zones de liaison, avec pour effet de fragiliser le distributeur. Comme un distributeur fragilisé est considéré comme détérioré, le technicien en charge de la maintenance se doit de déposer et remplacer le distributeur fragilisé lors des opérations de maintenance, ce qui entraîne bien entendu un coût en termes de pièce, de main d'oeuvre et de temps d'immobilisation de l'aéronef.

Bien que la littérature propose des inserts de refroidissement pour les aubes mobiles de moteurs, comme celui décrit dans le document de brevet US 4 798 515 A, de tels inserts ne sont pas applicables aux pales de distributeurs.

### RESUME DE L'INVENTION

Pour répondre aux problèmes évoqués ci-dessus de sollicitations au niveau des zones de liaison entre les chemises et le distributeur haute ou basse pression, le demandeur propose une pale de distributeur dans laquelle les chemises sont liées l'une à l'autre de sorte à être mécaniquement indépendantes dudit distributeur.

Selon un premier aspect, l'invention concerne une pale de distributeur pour turbomachine comportant un corps de pale dans lequel est ménagée au moins une cavité traversante s'étendant entre une extrémité interne de la pale et une extrémité externe de ladite pale et abritant, respectivement, une première et une seconde chemises :
- la première chemise s'étendant le long d'un bord de fuite de la pale, et comportant une face fermée (223) débouchant à l'extrémité interne de la pale et une face ouverte (224) débouchant à l'extrémité externe de ladite pale, et
- la seconde chemise s'étendant le long d'un bord d'attaque de ladite pale et comportant une face fermée (243) débouchant à l'extrémité externe de la pale et une face ouverte (244) débouchant à l'extrémité interne de ladite pale.

Cette pale se caractérise par le fait que chacune des première et seconde chemises comporte un système d'entrelacement adapté pour lier la première chemise à la seconde chemise ensemble, indépendamment du corps de pale, ledit système d'entrelacement (251-254) comportant au moins un ergot (252, 254) en saillie sur la face fermée de chacune des chemises et un orifice (251, 253) ménagé dans la face ouverte de chacune des chemises, l'ergot de chaque face fermée étant apte à s'insérer dans l'orifice de la face ouverte de l'autre chemise.

Cette pale de distributeur, basse ou haute pression, présente l'avantage de comporter des chemises qui sont mécaniquement indépendantes du corps de pale et dont la zone de liaison n'est, par conséquent, pas sensible aux éventuelles différences de dilatation des matériaux utilisés pour fabriquer le corps de pale et les chemises.

De façon avantageuse, le corps de pale peut comporter une première et une seconde cavités traversantes qui s'étendent coaxialement entre l'extrémité interne et l'extrémité externe de la pale, la première chemise étant logée à l'intérieur de la première cavité de la pale et la seconde chemise étant logée à l'intérieur de la seconde cavité de ladite pale.

Outre les caractéristiques qui viennent d'être évoquées dans les paragraphes précédents, la pale de distributeur selon un aspect de l'invention peut présenter une ou plusieurs caractéristiques complémentaires parmi les suivantes, considérées individuellement ou selon toutes les combinaisons techniquement possibles :
- la face ouverte de chacune des chemises comporte une collerette s'étendant au moins partiellement sur la face fermée de l'autre chemise et en ce que l'orifice de la face ouverte est ménagé dans la collerette.
- l'ergot sur la face fermée de chaque chemise est fixé par soudure ou brasage dans l'orifice de la face ouverte de l'autre chemise.
- l'ergot sur la face fermée de chaque chemise et l'orifice de la face ouverte de l'autre chemise comportent des formes et des dimensions adaptées pour s'emboîter l'un dans l'autre.
- l'ergot de la première chemise et l'orifice de la seconde chemise ont des formes et/ou dimensions différentes de celles de l'ergot de la seconde chemise et de l'orifice de la première chemise.
- l'ergot est de forme cylindrique ou cylindrique elliptique et l'orifice est de forme, respectivement, circulaire ou ovale.
- l'ergot est de forme parallélépipédique, pyramidale ou prismatique et l'orifice est d'une forme polygonale complémentaire.

Selon un deuxième aspect, l'invention concerne un distributeur haute ou basse pression pour turbomachine comportant une couronne de pales fixes, montées entre une plateforme annulaire interne et une plateforme annulaire externe, coaxiales, caractérisé en ce que chaque pale est conforme à la pale définie ci-dessus.

Selon un troisième aspect, l'invention concerne une turbomachine comportant un distributeur haute ou basse pression tel que défini ci-dessus.

Selon un quatrième aspect, l'invention concerne un procédé de fabrication d'une pale d'un distributeur pour turbomachine, comportant les opérations suivantes :
- fabrication d'un corps de pale muni d'au moins une cavité traversante s'étendant entre une extrémité interne et une extrémité externe de ladite pale,
- insertion d'une première chemise à l'intérieur de la première cavité de la pale, via l'extrémité externe de ladite pale,
- insertion d'une seconde chemise à l'intérieur de la première cavité de la pale, via l'extrémité interne de ladite pale, avec emboitement d'un ergot de la seconde chemise dans un orifice de la première chemise et d'un orifice de la seconde chemise sur un ergot de la première chemise, de sorte à lier/attacher/joindre la première et la seconde chemises indépendamment du corps de pale, et
- fixation de chacun des ensembles ergot/orifice par brasage ou soudage.

Ce procédé de fabrication permet un montage simple des chemises dans le corps de pale.

Lorsque le corps de pale comporte deux cavités coaxiales, la première chemise est insérée à l'intérieur de la première cavité via l'extrémité externe de la pale et la seconde chemise est insérée à l'intérieur de la seconde cavité via l'extrémité interne de ladite pale.

### BREVE DESCRIPTION DES FIGURES

D'autres avantages et caractéristiques de l'invention apparaîtront à la lecture de la description, illustrée par les figures dans lesquelles :
La figure 1, déjà décrite, représente une vue schématique partielle d'un distributeur haute pression de turbine selon l'art antérieur ;
La figure 2, déjà décrite, représente une vue schématique, montée, d'une pale avec deux chemises d'un distributeur haute pression selon l'art antérieur ;
La figure 3, déjà décrite, représente une vue schématique, en éclaté, de la pale et des deux chemises de la figure 2 ;
La figure 4, déjà décrite, représente des exemples de fissures dans les zones de liaison entre une chemise et un distributeur haute pression selon l'art antérieur ;
La figure 5 représente une vue schématique en perspective d'un exemple de chemises d'une pale de distributeur selon l'invention ;
La figure 6 représente une vue schématique en perspective des chemises de la figure 5 montées dans une pale de distributeur selon l'invention ;
La figure 7 représente une vue schématique en perspective de chemises montées dans une pale selon l'invention avec des première et seconde variantes de l'ensemble ergot/orifice ;
La figure 8 représente un exemple de diagramme fonctionnel du procédé de fabrication d'une pale selon l'invention.

### DESCRIPTION DETAILLEE

Un exemple de réalisation d'une pale de distributeur de turbine dans laquelle les chemises sont imbriquées l'une dans l'autre est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

Un exemple d'une pale de distributeur de turbine est représenté sur les figures 5 et 6. Dans cet exemple, la pale 100 est une pale d'un distributeur haute pression, étant entendu que les caractéristiques de cette pale sont identiques à celles d'une pale de distributeur basse pression. Cette pale 100 est montée entre les plateformes interne 11 et externe 12 du distributeur. Elle comporte un corps de pale 110, creux, identique à celui représenté sur la figure 3 et décrit précédemment. Ce corps de pale 110 peut comporter une unique cavité traversante 122 s'étendant entre l'extrémité interne 111 et l'extrémité externe 112 de la pale. En variante, il peut comporter deux cavités traversantes 122, 124 séparées par une cloison et qui s'étendent de façon coaxiale entre les extrémités interne et externe de la pale. La description qui suite sera faite dans le cas où le corps de pale 110 comporte un premier orifice traversant 122 qui s'étend radialement le long du bord de fuite 116, entre l'extrémité interne 111 et l'extrémité externe 112 de la pale, et un second orifice traversant 124 qui s'étend radialement le long du bord d'attaque 117, entre l'extrémité interne 111 et l'extrémité externe 112 de ladite pale, les deux orifices traversants 122, 124 étant sensiblement coaxiaux et séparés par une cloison interne 123.

Selon l'invention, la pale 100 comporte une première chemise 220 logée dans le premier orifice traversant 122 et une seconde chemise 240 logée dans le second orifice traversant 124. Chaque chemise 220, 240 comporte une paroi radiale 221, 241 s'étendant de façon sensiblement annulaire entre une face fermée 223, 243 et une face ouverte 224, 244. La face fermée 223 de la première chemise 220 est positionnée au niveau de l'extrémité interne 111 de la pale 100 et la face fermée 243 de la seconde chemise 240 est positionnée au nveau de l'extrémité externe 112 de la pale 100. La face ouverte 224 de la première chemise 220 est positionnée au niveau de l'extrémité externe 112 de la pale 100 et la face ouverte 244 de la seconde chemise 240 est positionnée au niveau de l'extrémité interne 111 de la pale 100. La paroi radiale 221, 241 de chacune des chemises comporte une pluralité de trous 222, 242 répartis sur toute la surface de ladite paroi radiale.

Les dimensions des chemises 220, 240 sont adaptées aux dimensions internes des orifices traversants, respectivement 122, 124, de sorte à délimiter un interstice périphérique tout autour de la paroi de chacune des chemises, cet interstice étant conçu pour permettre la circulation de l'air de refroidissement. Chaque chemise 220, 240 peut comporter sur la surface extérieure de sa paroi radiale 221, 241 au moins une protubérance ou renflement, respectivement conçue pour assurer un entrefer latéral entre la chemise et le corps de pale 110. Autrement dit, la protubérance est logée à l'intérieur de l'interstice et assure le maintien de l'entrefer latéral autour de la chemise.

Selon certains modes de réalisation, chaque chemise 220, 240 comporte une collerette, respectivement 225 et 245, autour de sa face ouverte 224, 244 permettant de maintenir un entrefer radial entre la chemise et l'extrémité de la pale 100. Cette collerette 225, 245 est une étendue sensiblement plane se déployant sur la totalité ou une partie du contour de la face ouverte 224, 244 de la chemise et recouvrant, lorsque les chemises sont montées dans le corps de pale, une partie au moins de la face fermée de l'autre chemise. Cette collerette 224, 245 permet de maintenir un entrefer radial entre la chemise et l'extrémité de la pale.

Selon l'invention, chaque chemise comporte un système d'entrelacement 251-254 adapté pour lier mécaniquement les chemises l'une à l'autre, indépendamment du corps de pale et/ou du distributeur. Autrement dit, le système d'entrelacement 251-254 permet d'attacher la première chemise 220 sur la seconde chemise 240 et, réciproquement, la seconde chemise sur la première chemise, sans fixer aucune des deux chemises sur la pale ou le distributeur.

Dans l'exemple des figures 5 et 6, le système d'entrelacement 251-254 de chaque chemise comporte un ergot 252, 254 et un orifice 251, 253. L'ergot 252, 254 est une pièce en saillie ou une proéminence, par exemple métallique, ménagée radialement sur la face fermée 223, 243 de la chemise. L'orifice 251, 253 est un trou traversant ménagé sur la face ouverte 224, 244 de la chemise. Lorsque la face ouverte est équipée d'une collerette 225, 245, l'orifice 224, 244 est de préférence réalisé dans la collerette. Dans cet exemple, et comme montré sur la figure 6, l'ergot 254 de la seconde chemise 240 est inséré dans l'orifice 251 de la première chemise 220 et, réciproquement, l'ergot 252 de la première chemise 220 est inséré dans l'orifice 253 de la seconde chemise 240. De cette façon, la première chemise 220 est attachée à la seconde chemise 240 de part et d'autre des extrémités 111 et 112 de la pale. En d'autres termes, les deux chemises 220, 240, logées chacune dans une cavité de la pale, sont liées l'une à l'autre au niveau de l'extrémité interne 111 de la pale et au niveau de l'extrémité externe 112 de la pale. La cloison interne 123 du corps de pale se trouve intercalée entre les deux chemises 220, 240. Ainsi, chacune des chemises 220, 240 est solidaire de la pale, sans toutefois être fixée directement sur la pale ou sur le distributeur. Les chemises sont donc mécaniquement indépendantes du distributeur.

Dans certains modes de réalisation, afin de fixer l'assemblage des chemises entre elles, l'ergot sur la face fermée de chaque chemise est fixé par soudage ou brasage dans l'orifice de la face ouverte de l'autre chemise de sorte que chaque ergot 252, 254 soit fixé avec son orifice respectif 253, 251. La fixation par soudage ou brasage peut être réalisée avec ou sans apport de métal supplémentaire.

Même lorsqu'elles sont fixées au moyen d'une soudure ou d'une brasure, les zones de liaison des deux chemises (c'est-à-dire les zones où les deux chemises s'entrelacent) ne sont soumises à aucune contrainte mécanique résultant d'une différence de dilatation. En effet, les deux chemises étant fabriquées dans le même matériau et étant soumises à des températures similaires (puisque toutes deux sont dans le même flux de ventilation), aucune contrainte mécanique résultant de différences de dilatation ne s'applique sur les zones de liaison. Le risque de fissuration dans ces zones de liaison est donc écarté.

Selon certains modes de réalisation, le système d'entrelacement des chemises à l'extrémité externe de la pale et le système d'entrelacement des chemises à l'extrémité interne de la pale sont identiques. Au contraire, selon certains autres modes de réalisation, les deux systèmes d'entrelacement sont différents l'un de l'autre.

Lorsque chacun des systèmes d'entrelacement comporte un ergot sur la face fermée d'une chemise et un orifice sur la face ouverte de l'autre chemise, les formes et les dimensions des ergots et orifices sont adaptées pour s'emboîter l'un dans l'autre. En particulier, l'orifice présente une forme complémentaire de la forme extérieure de l'ergot, c'est-à-dire de son contour ; de même l'orifice présente des dimensions légèrement supérieures à celles du contour de l'ergot de façon à ce que l'ergot puisse traverser l'orifice avec un jeu minime.

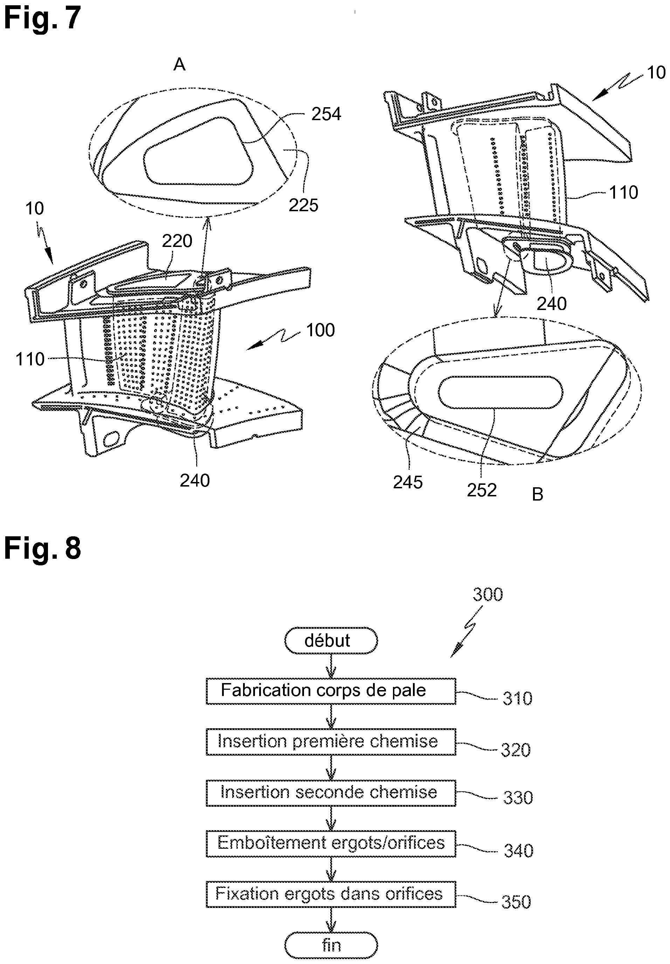

Par exemple, comme représenté sur la figure 6, l'ergot 252 et/ou 254 peut présenter une forme tubulaire, de section circulaire. Il peut, par exemple, avoir un diamètre d d'environ 2mm et une longueur d'environ 5mm. L'orifice 251 et/ou 253 présente alors un orifice de section circulaire d'un diamètre légèrement supérieur à 2mm. Dans un autre exemple, l'ergot 252 et/ou 254 peut présenter une forme cylindrique elliptique, comme représenté dans l'exemple B de la figure 7 ; l'orifice 251 et/ou 253 présente alors une forme ovale. Dans l'exemple A de la figure 7, l'ergot 252 et/ou 254 peut présenter une forme parallélépipédique, avec des arrêtes arrondies ; l'orifice 251 et/ou 253 présente alors une forme de parallélogramme avec des angles arrondis. Dans d'autres exemples encore, l'ergot 252 et/ou 254 peut prendre différentes formes parallélépipédiques, par exemple un parallélépipède de section carrée ou rectangulaire, ou des formes pyramidales ou prismatiques, etc.; l'orifice 251 et/ou 253 est alors d'une forme polygonale complémentaire, par exemple carrée, rectangulaire ou triangulaire.

Les exemples décrits précédemment proposent un ensemble ergot/orifice liant les deux chemises au niveau de la face externe de la pale et un autre ensemble ergot/orifice liant les deux chemises au niveau de la face interne de la pale. Bien entendu, dans certains modes de réalisation, plusieurs ensembles ergot/orifice peuvent être aménagés sur chaque face fermée et chaque face ouverte des chemises afin d'augmenter le lien mécanique entre les deux chemises. Ces différents ensembles peuvent être de formes et/ou dimensions identiques ou différentes.

La pale de distributeur telle qu'elle vient d'être décrite peut être fabriquée par un procédé 300, en mettant en oeuvre les opérations 310 à 350 représentées sur la figure 8. Ces opérations sont les suivantes :
- Fabrication, suivant un procédé classique, d'un corps de pale 110 dans lequel sont ménagées au moins une première et une seconde cavités traversantes 122, 124 s'étendant coaxialement entre l'extrémité interne 111 et l'extrémité externe 112 de la pale (étape 310),
- Insertion, par l'extrémité externe 112 de la pale, de la première chemise 220 à l'intérieur de la première cavité 122 du corps de pale (étape 320),
- Insertion, par l'extrémité interne 111 de la pale, de la seconde chemise 240 à l'intérieur de la seconde cavité 124 du corps de pale (étape 330),
- Assemblage des deux chemises 220, 240 en insérant l'ergot 254 de la seconde chemise dans l'orifice 251 de la première chemise et l'orifice 253 de la seconde chemise sur l'ergot 252 de la première chemise (étape 340), et
- Fixation par brasage ou soudage de l'ensemble ergot 254 et orifice 251 et de l'ensemble ergot 252 et orifice 253 (étape 350).

Bien entendu, des opérations similaires aux opérations 310 à 350 sont réalisées pour chacune des pales 100 du distributeur 10 de sorte que chacune desdites pales soit pourvue des mêmes caractéristiques permettant de lier ensemble la première et la seconde chemises de chaque pale, indépendamment du corps de pale et donc du distributeur.

## Revendications

1. Pale (100) de distributeur pour turbomachine comportant un corps de pale (110) dans lequel est ménagée au moins une cavité traversante (122) s'étendant entre une extrémité interne (111) de la pale et une extrémité externe (112) de ladite pale et abritant une première et une seconde chemises (220, 240),
- la première chemise (220) s'étendant le long d'un bord de fuite (116) de la pale et comportant une face fermée (223) débouchant à l'extrémité interne de la pale et une face ouverte (224) débouchant à l'extrémité externe de ladite pale,
- la seconde chemise (240) s'étendant le long d'un bord d'attaque (117) de ladite pale et comportant une face fermée (243) débouchant à l'extrémité externe de la pale et une face ouverte (244) débouchant à l'extrémité interne de ladite pale,
**caractérisée en ce que** chacune des première et seconde chemises (220, 240) comporte un système d'entrelacement (251-254) adapté pour lier la première chemise (220) à la seconde chemise (240) ensemble, indépendamment du corps de pale, ledit système d'entrelacement (251-254) comportant au moins un ergot (252, 254) en saillie sur la face fermée de chacune des chemises et un orifice (251, 253) ménagé dans la face ouverte de chacune des chemises, l'ergot de chaque face fermée étant apte à s'insérer dans l'orifice de la face ouverte de l'autre chemise.

2. Pale selon la revendication 1, **caractérisé en ce que** la face ouverte (224, 244) de chacune des chemises comporte une collerette (225, 245) s'étendant au moins partiellement sur la face fermée (223, 243) de l'autre chemise et **en ce que** l'orifice (251, 253) de la face ouverte est ménagé dans la collerette.

3. Pale selon la revendication 1 ou 2, **caractérisé en ce que** l'ergot (252, 254) sur la face fermée de chaque chemise est fixé par soudure ou brasage dans l'orifice (251, 253) de la face ouverte de l'autre chemise.

4. Pale selon l'une quelconque des revendications 1 à 3, **caractérisée en ce que** l'ergot (252, 254) sur la face fermée de chaque chemise et l'orifice (251, 253) de la face ouverte de l'autre chemise comportent des formes et des dimensions adaptées pour s'emboîter l'un dans l'autre.

5. Pale selon l'une quelconque des revendications 1 à 4, **caractérisée en ce que** l'ergot (252) de la première chemise et l'orifice (253) de la seconde chemise ont des formes et/ou dimensions différentes de celles de l'ergot (254) de la seconde chemise et de l'orifice (251) de la première chemise.

6. Pale selon l'une quelconque des revendications 4 à 5, **caractérisée en ce que** l'ergot (252, 254) est de forme cylindrique ou cylindrique elliptique et l'orifice est de forme, respectivement, circulaire ou ovale.

7. Pale selon l'une quelconque des revendications 4 à 5, **caractérisée en ce que** l'ergot (252, 254) est de forme parallélépipédique, pyramidale ou prismatique et l'orifice est d'une forme polygonale complémentaire.

8. Distributeur (10) haute ou basse pression pour turbomachine comportant une couronne de pales (100) fixes, montées entre une plateforme annulaire interne (11) et une plateforme annulaire externe (12), coaxiales, **caractérisé en ce que** chaque pale est conforme à l'une quelconque des revendications 1 à 7.

9. Turbomachine, **caractérisé en ce qu'**elle comporte un distributeur (10) haute ou basse pression selon la revendication 8.

10. Procédé de fabrication (300) d'une pale (100) d'un distributeur pour turbomachine selon l'une quelconque des revendications 1 à 7, comportant les opérations suivantes :
- fabrication (310) d'un corps de pale (110) muni d'au moins une cavité traversante (122) s'étendant entre une extrémité interne (111) et une extrémité externe (112) de ladite pale,
- insertion (320) d'une première chemise (220) à l'intérieur de la cavité (122) de la pale, via l'extrémité externe de ladite pale,
- insertion (330) d'une seconde chemise (240) à l'intérieur de la cavité (122) de la pale, via l'extrémité interne de ladite pale, avec emboîtement (340) d'un ergot (254) de la seconde chemise dans un orifice (225) de la première chemise et d'un orifice (253) de la seconde chemise sur un ergot (252) de la première chemise, de sorte à lier la première et la seconde chemises indépendamment du corps de pale, et
- fixation (350) par brasage ou soudage de chacun des ensembles ergot/orifice (254/225, 252/253).

## Patentansprüche

1. Leitschaufel (100) für eine Turbomaschine mit einem Schaufelkörper (110), in dem mindestens ein durchgehender Hohlraum (122) ausgebildet ist, der sich zwischen einem inneren Ende (111) der Schaufel und einem äußeren Ende (112) der Schaufel erstreckt und einen ersten und einen zweiten Laufmantel (220, 240) aufnimmt,
- wobei sich der erste Mantel (220) entlang einer Hinterkante (116) der Schaufel erstreckt und eine geschlossene Seite (223), die in das innere Ende der Schaufel mündet, und eine offene Seite (224), die in das äußere Ende der Schaufel mündet, aufweist,
- wobei sich der zweite Mantel (240) entlang einer Vorderkante (117) der Schaufel erstreckt und eine geschlossene Seite (243), die in das äußere Ende der Schaufel mündet, und eine offene Seite (244), die in das innere Ende der Schaufel mündet, aufweist,
**dadurch gekennzeichnet, dass** sowohl der erste als auch der zweite Mantel (220, 240) ein Verflechtungssystem (251-254) aufweist, das geeignet ist, den ersten Mantel (220) mit dem zweiten Mantel (240) unabhängig vom Schaufelkörper miteinander zu verbinden, wobei dieses Verflechtungssystem (251-254) mindestens einen Zapfen (252, 254) umfasst, der an der geschlossenen Seite jedes Mantels vorsteht, und eine Öffnung (251, 253), die in der offenen Seite jedes Mantels eingearbeitet ist, wobei der Zapfen jeder geschlossenen Seite geeignet ist, in die Öffnung der offenen Seite des anderen Mantels einzugreifen.

2. Schaufel nach Anspruch 1, **dadurch gekennzeichnet, dass** die offene Seite (224, 244) jedes Mantels einen Bund (225, 245) aufweist, der sich zumindest teilweise über die geschlossene Seite (223, 243) des anderen Mantels erstreckt, und dass die Öffnung (251, 253) der offenen Seite in den Bund eingearbeitet ist.

3. Schaufel nach Anspruch 1 oder 2, **dadurch gekennzeichnet, dass** der Zapfen (252, 254) an der geschlossenen Seite jedes Mantels durch Schweißen oder Löten in der Öffnung (251, 253) der offenen Seite des anderen Mantels befestigt ist.

4. Schaufel nach einem der Ansprüche 1 bis 3, **dadurch gekennzeichnet, dass** der Zapfen (252, 254) auf der geschlossenen Seite jedes Mantels und die Öffnung (251, 253) der offenen Seite des anderen Mantels Formen und Abmessungen aufweisen, die geeignet sind, ineinander zu passen.

5. Schaufel nach einem der Ansprüche 1 bis 4, **dadurch gekennzeichnet, dass** der Zapfen (252) des ersten Mantels und die Öffnung (253) des zweiten Mantels andere Formen und/oder Abmessungen haben als der Zapfen (254) des zweiten Mantels und der Öffnung (251) des ersten Mantels.

6. Schaufel nach einem der Ansprüche 4 bis 5, **dadurch gekennzeichnet, dass** der Zapfen (252, 254) eine zylindrische oder elliptisch-zylindrische Form hat und die Öffnung eine kreisförmige bzw. ovale Form hat.

7. Schaufel nach einem der Ansprüche 4 bis 5, **dadurch gekennzeichnet, dass** der Zapfen (252, 254) quaderförmig, pyramidenförmig oder prismatisch ist und die Öffnung eine komplementäre polygonale Form hat.

8. Hoch- oder Niederdruckverteiler (10) für eine Turbomaschine mit einem Kranz fester Schaufeln (100), die zwischen einer inneren ringförmigen Plattform (11) und einer äußeren ringförmigen Plattform (12) koaxial montiert sind, **dadurch gekennzeichnet, dass** jede Schaufel einem der Ansprüche 1 bis 7 entspricht.

9. Turbomaschine, **dadurch gekennzeichnet, dass** sie einen Hoch- oder Niederdruckverteiler (10) nach Anspruch 8 umfasst.

10. Verfahren zur Herstellung (300) einer Leitschaufel (100) für eine Turbomaschine nach einem der Ansprüche 1 bis 7, das folgende Schritte umfasst:
- Herstellen (310) eines Schaufelkörpers (110), der mit mindestens einem durchgehenden Hohlraum (122) versehen ist, der sich zwischen einem inneren Ende (111) und einem äußeren Ende (112) dieser Schaufel erstreckt,
- Einführen (320) eines ersten Mantels (220) in den Hohlraum (122) der Schaufel über das äußere Ende dieser Schaufel,
- Einführen (330) eines zweiten Mantels (240) in den Hohlraum (122) der Schaufel über das innere Ende dieser Schaufel, wobei ein Zapfen (254) des zweiten Mantels in eine Öffnung (225) des ersten Mantels und eine Öffnung (253) des zweiten Mantels mit einem Zapfen (252) des ersten Mantels einrasten (340), sodass der erste und der zweite Mantel unabhängig vom Schaufelkörper verbunden werden, und
- Befestigung (350) durch Löten oder Schweißen jeder der Zapfen- /Öffnungs-Einheiten (254/225, 252/253).

## Claims

1. Nozzle blade (100) for a turbine engine comprising a blade body (110) wherein at least one through-cavity (122) is provided extending between an inner end (111) of the blade and an outer end (112) of said blade and housing a first and a second liners (220, 240),
- the first liner (220) extending along a trailing edge (116) of the blade and comprising a closed face (223) emerging at the inner end of the blade and an open face (224) emerging at the outer end of said blade,
- the second liner (240) extending along a leading edge (117) of said blade and comprising a closed face (243) emerging at the outer end of the blade and an open face (244) emerging at the inner end of said blade,
**characterised in that** each one of the first and second liners (220, 240) comprises an intertwining system (251-254) adapted to link the first liner (220) to the second liner (240), independently of the blade body, said intertwining system (251-254) comprising at least one lug (252, 254) protruding on the closed face of each one of the liners and an orifice (251, 253) provided in the open face of each one of the liners, the lug of each closed face being able to be inserted into the orifice of the open face of the other liner.

2. Blade according to claim 1, **characterised in that** the open face (224, 244) of each one of the liners comprises a collar (225, 245) extending at least partially on the closed face (223, 243) of the other liner and **in that** the orifice (251, 253) of the open face is provided in the collar.

3. Blade according to claim 1 or 2, **characterised in that** the lug (252, 254) on the closed face of each liner is fastened by welding or brazing in the orifice (251, 253) of the open face of the other liner.

4. Blade according to any of claims 1 to 3, **characterised in that** the lug (252, 254) on the closed face of each liner and the orifice (251, 253) of the open face of the other liner comprise shapes and dimensions suitable for nesting into one another.

5. Blade according to any of claims 1 to 4, **characterised in that** the lug (252) of the first liner and the orifice (253) of the second liner have shapes and/or dimensions that are different from those of the lug (254) of the second liner and of the orifice (251) of the first liner.

6. Blade according to any of claims 4 to 5, **characterised in that** the lug (252, 254) is of cylindrical or elliptical cylindrical shape and the orifice is of a, respectively, circular or oval shape.

7. Blade according to any of claims 4 to 5, **characterised in that** the lug (252, 254) is of parallelepiped, pyramidal or prismatic shape and the orifice is of a complementary polygonal shape.

8. High or low pressure nozzle (10) for a turbine engine comprising a ring of fixed blades (100), mounted between an internal annular platform (11) and an external annular platform (12), coaxial, **characterised in that** each blade is in accordance with any of claims 1 to 7.

9. Turbine engine, **characterised in that** it comprises a high or low pressure nozzle (10) according to claim 8.

10. Method for manufacturing (300) a blade (100) of a nozzle for a turbine engine according to any of claims 1 to 7, comprising the following operations:
- manufacturing (310) of a blade body (110) provided with at least one through-cavity (122) extending between an inner end (111) and an outer end (112) of said blade,
- inserting (320) of a first liner (220) inside the cavity (122) of the blade, via the outer end of said blade,
- inserting (330) of a second liner (240) inside the cavity (122) of the blade, via the inner end of said blade, with nesting (340) of a lug (254) of the second liner in an orifice (225) of the first liner and of an orifice (253) of the second liner on a lug (252) of the first liner, so as to link the first and the second liners independently of the blade body, and
- fastening (350) by brazing or welding of each one of the lug/orifice assemblies (254/225, 252/253).
